# EUROPÄISCHE PATENTANMELDUNG

(11) **EP 1 604 852 A2**
(43) Veröffentlichungstag der Anmeldung: **14.12.2005**
(21) Anmeldenummer: 05012271.2
(22) Anmeldetag: 08.06.2005
(51) Int. Cl.: B60J 7/20

(54) **Abdeckvorrichtung für eine in einem oberen Seitenwandbereich eines Cabrioletfahrzeuges angeordnete Durchtrittsöffnung**

(30) Priorität: 08.06.2004 DE 102004027935
(71) Anmelder: Wilhelm Karmann GmbH, 49084 Osnabrück (DE)
(72) Erfinder: Van Berkum, Wim, 49179 Ostercappeln (DE)

(57) **Zusammenfassung**

Ein Abdeckvorrichtung für eine in einem oberen Seitenwandbereich eines Cabrioletfahrzeugs angeordnete Durchgangsöffnung, durch die sich beim Öffnen und Schließen des Verdecks wenigstens ein Gestängeteil eines seitlichen Verdeckgestänges hindurchbewegt, enthält ein die Durchgangsöffnung bei geöffnetem Verdeck verschließendes Abdeckteil (26), das in einer Führung (50) derart beweglich geführt ist, dass es bei Schließen des Verdecks unter Freigeben der Durchtrittsöffnung in Vorwärtsrichtung des Fahrzeugs nach unten und zusätzlich in Querrichtung des Fahrzeugs bewegt wird.

## Beschreibung

Die Erfindung betrifft eine Abdeckvorrichtung für eine in einem oberen Seitenwandbereich eines Cabrioletfahrzeuges angeordnete Durchtrittsöffnung gemäß dem Oberbegriff des Anspruchs 1.

Bei einer bekannten gattungsgemäßen Abdeckvorrichtung (EP 1288046 A2) ist das Abdeckteil als ein Schieber ausgebildet, der beim Öffnen des Verdecks durch ein Gestängeteil im Wesentlichen in Fahrzeuglängsrichtung schräg nach unten unter eine Verkleidung bewegt wird. Der Schieber muss insgesamt um eine Strecke derart bewegt werden, dass er sich bei geschlossenem Verdeck vollständig vor dem die Durchtrittsöffnung durchragenden Teil des Verdeckgestänges befindet. Dies bedingt einem verhältnismäßig großen Platzbedarf vor dem Gestängeteil. Desweiteren müssen beidseitig des Schiebers fahrzeugfeste Führungen vorgesehen sein.

Der Erfindung liegt die Aufgabe zu Grunde, eine gattungsgemäße Abdeckvorrichtung derart weiter zu bilden, dass bei kostengünstiger Konstruktion und einfacher Montierbarkeit ein geringer Bauraumbedarf besteht.

Diese Aufgabe wird mit einer Abdeckvorrichtung gemäß dem Anspruch 1 gelöst.

Dadurch, dass sich das erfindungsgemäße Abdeckteil beim Schließen des Verdecks nicht nur in Längsrichtung sondern auch in Querrichtung des Fahrzeugs schräg nach unten bewegt, kann sich das in geschlossenem Zustand des Verdecks durch die Durchtrittsöffnung hindurch ragende Verdeckgestängeteil seitlich an dem Abdeckteil vorbei bewegen, so dass verminderte Platzerfordernisse bestehen. Außerdem kann das Abdeckteil kompakt und einfach montierbar geführt werden.

Die Unteransprüche sind auf vorteilhafte Ausführungsformen und Weiterbildungen der erfindungsgemäßen Abdeckvorrichtung gerichtet.

Die Erfindung wird im Folgenden anhand schematischer Zeichnungen beispielsweise und mit weiteren Einzelheiten erläutert.

In den Figuren stellen dar:
- Fig. 1: eine teilweise aufgeschnittene, perspektivische Ansicht eines Cabrioletfahrzeugs mit einem in Schließstellung befindlichen Verdeckgestänge;
- Fig. 2: eine vergrößerte perspektivische Ansicht gemäß Figur 1 mit einem in einen Verdeckkasten versenkten Faltverdeck;
- Fig. 3: eine perspektivische Darstellung eines Verkleidungsteils;
- Fig. 4: eine perspektivische Ansicht eines Abdeckteils gemäß der Erfindung;
- Fig. 5: eine perspektivische Darstellung eines Führungsbauteils gemäß der Erfindung;
- Fig. 6: eine schematische Aufsicht auf das Führungsteil und das Abdeckteil gemäß Figuren 4 und 5 in zwei unterschiedlichen Stellungen des Abdeckteils;
- Fig. 7: einen Schnitt durch die Anordnung gemäß Figur 6 in der Ebene VII-7; und
- Fig. 8: eine Ansicht von links der Anordnung gemäß Figur 7.

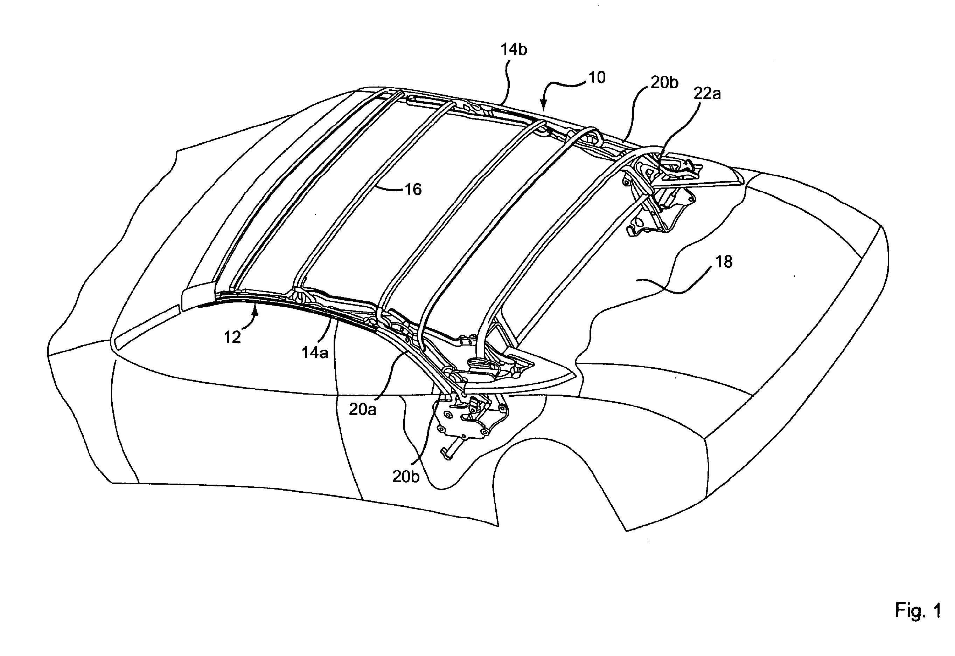

Gemäß Figur 1 weist ein insgesamt mit 10 bezeichnetes Cabrioletfahrzeug ein im geschlossenen Zustand dargestelltes, insgesamt mit 14 bezeichnetes Verdeckgestänge auf, das aus zwei zur Fahrzeuglängsebene symmetrisch angeordneten Seitengestängen 14a und 14b zusammengesetzt ist, die über Querspriegel 16 miteinander verbunden sind. Die Dachhaut ist in Figur 1 nicht dargestellt. Das Verdeckgestänge ist zusammen mit der von ihm aufgespannten Dachhaut in einem heckseitigen Verdeckkasten 18 ablegbar.

Im geschlossenen Zustand des Verdecks durchgreifen hinterste Gestängeteile 20a, 20b Durchgangsöffnungen 22a, 22b, die im jeweils oberen Seitenrandbereich der Fahrzeugkarosserie vorzugsweise in dort angeordneten Innenverkleidungsteilen 23a, 23b vorgesehen sind und im Verdeckkasten 18 abgelegten Zustand des Verdecks jeweils von einer Abdeckplatte verschlossen sind.

Die bisher beschriebene Anordnung ist an sich bekannt, so dass ihre Funktion nicht erläutert wird.

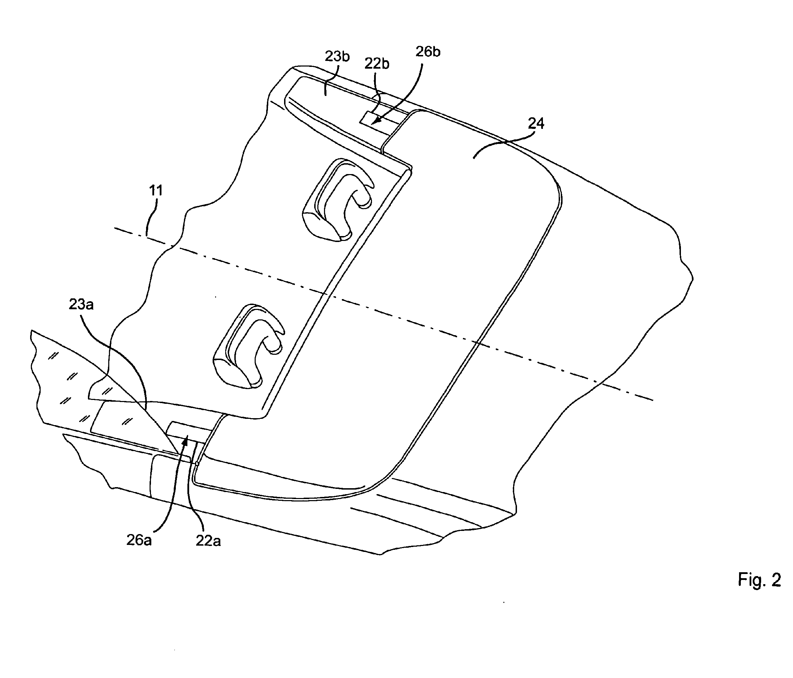

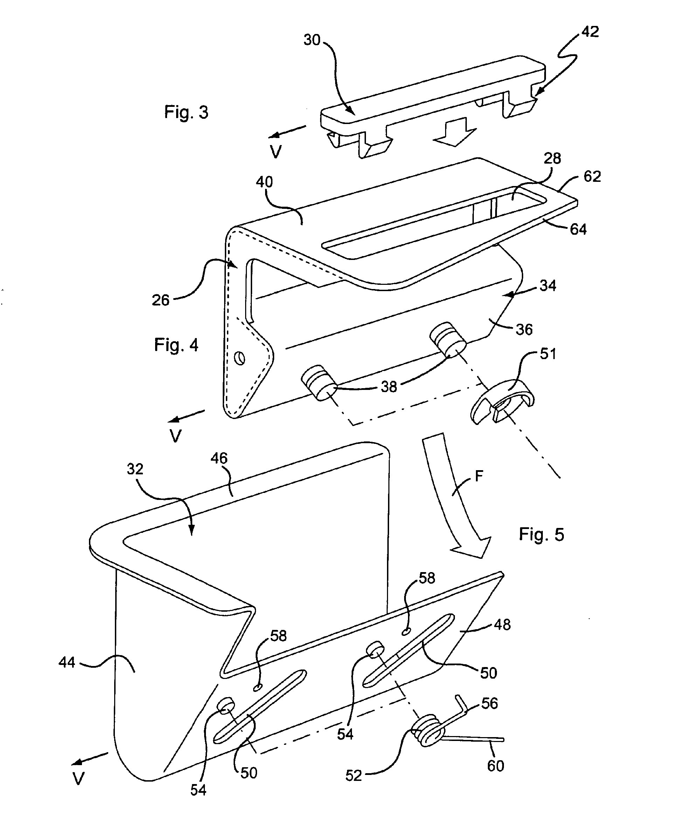

Figur 2 zeigt einen Ausschnitt aus Figur 1 bei vollständig geöffnetem, unter einer Verdeckklappe 24 abgelegtem Verdeck. In Figur 2 deutlich sichtbar sind die mittels Abdeckteilen 26a und 26b verschlossenen Durchgangsöffnungen 22a, 22b in einem jeweiligen Innenverkleidungsteil 23a, 23b im hinteren oberen Seitenwandbereich des Fahrzeuginnenraums. Mit M ist eine Längsmittellinie des Fahrzeugs bezeichnet. Die gesamte Anordnung ist symmetrisch zur Längsmittelebene des Fahrzeugs, so dass im Folgenden nur die Abdeckung der in Fahrzeugslängsrichtung linken Durchgangsöffnung 22a erläutert wird. Dabei ist die Vorwärtsrichtung des Fahrzeugs in den Figuren 3,4 und 5 durch die Pfeile V gekennzeichnet.

Die erfindungsgemäße Abdeckung weist das insgesamt mit 26 bezeichnete Abdeckteil (Figur 4) auf, das eine Öffnung 28 aufweist, in die ein Verkleidungsteil 30 einclipsbar ist und das in einem Führungsgehäuse 32 montierbar ist.

Das Abdeckteil 26 hat einen im Querschnitt etwa dreiekkigen Körper 34, dessen eine Seitenfläche 36 eine Führungsfläche bildet, von der zwei Führungszapfen 38 vorstehen. Die von der Seitenfläche 36 abgewandte Seitenfläche ist nach oben verlängert und geht in ein flaches Oberteil 40 über, in dem die Öffnung 28 ausgebildet ist.

Das Verkleidungteil 30 hat plastisch biegbare Clipsarme 42, die in die Öffnung 28 derart einclipsbar sind, dass die Oberseite des Verkleidungsteils 30 die Öffnung 28 überdeckt.

Ein Führungsgehäuse 32 weist einen Unterteil 48 auf, der dem Körper 34 des Abdeckteils 26 entsprechend ausgebildet ist und an einer Stirnseite und einer Rückseite verlängert ist, um oben in einen Randflansch 46 überzugehen.

Die gemäß Figur 5 Vorderwand 48 des nach oben offenen Unterteils 44 bildet mit ihrer Innenseite eine der Seitenfläche 36 des Körpers 34 entsprechende Führungsfläche, an der die Seitenfläche 36 bei in das Führungsgehäuse 32 von oben eingesetztem Abdeckteil 26 anliegt. Das Einsetzen erfolgt in Richtung des Pfeils F.

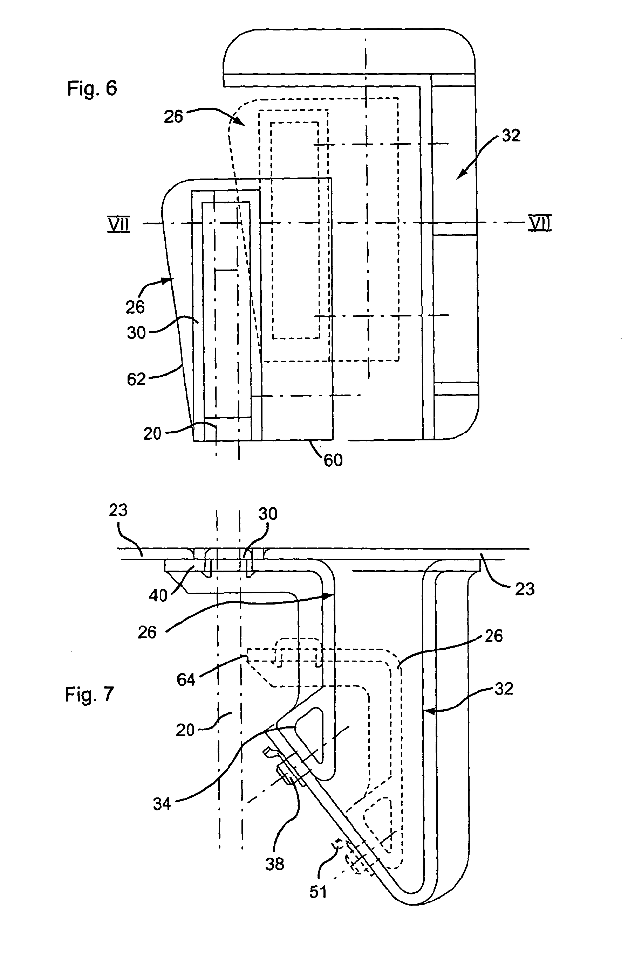

Die Führungszapfen 38 des in das Führungsgehäuse 32 eingesetztem Abdeckteils 26 durchragen in der Wand 48 ausgebildete Führungsschlitze 50, die bezogen auf die Vorwärtsrichtung schräg abwärts laufen. Auf die die Schlitze 50 durchragenden Führungszapfen 38 werden Sicherungsclipse 51 aufgesetzt, so dass das Abdeckteil 26 in dem Führungsgehäuse 32 unverlierbar aufgenommen wird. Weiter sind Schenkelfedern 52 vorgesehen, die auf an der Wand 48 ausgebildete Haltezapfen 54 aufgesetzt werden und mit ihrem einen Schenkel 56 in Löcher 58 der Wand 48 einragen und sich mit ihren anderen Schenkeln 60 von unten an dem Führungszapfen 38 abstützen (Figur 7), so dass das in dem Führungsgehäuse 32 montierte Abdeckteil 26 gemäß Figur 5 nach rechts oben vorgespannt ist.

Die gesamte vormontierte Baugruppe wird bei abgenommenem Innenverkleidungsteil 23 (Figur 2) an einem nicht dargestellten Stegblech der Fahrzeugkarosserie befestigt, indem beispielsweise die von der Wand 48 abgewandte Wand des Führungsgehäuses 32 mit dem Stegblech verklebt, vernietet oder sonstwie daran befestigt wird. Die Befestigung kann auch dadurch erfolgen, dass die Baugruppe mittels des Randflansches 46 an dem Innenverkleidungsteil 23 verklebt, vernietet oder sonst wie befestigt wird. Nach Montage des Führungsgehäuses 32 an der Fahrzeugkarosserie wird das Innenverkleidungsteil 23 angebracht, wobei die Anordnung dann derart ist, dass das am Abdeckteil 26 angebrachte Verkleidungsteil 30 die Durchgangsöffnung 22 des Innenverkleidungsteils 23 derart durchragt, dass seine Oberseite bündig mit der Oberseite des Innenverkleidungsteils 23 verläuft (siehe Figur 7). Die Oberseite des Oberteils 40 befindet sich dabei in einer gemeinsamen Ebene mit der Oberseite des Randflansches 46. Gemäß Figuren 4 und 5 befinden sich die Führungszapfen 38 durch die Vorspannung der Schenkelfedern 52 an den rechten oberen Rändern der Führungsschlitze 50.

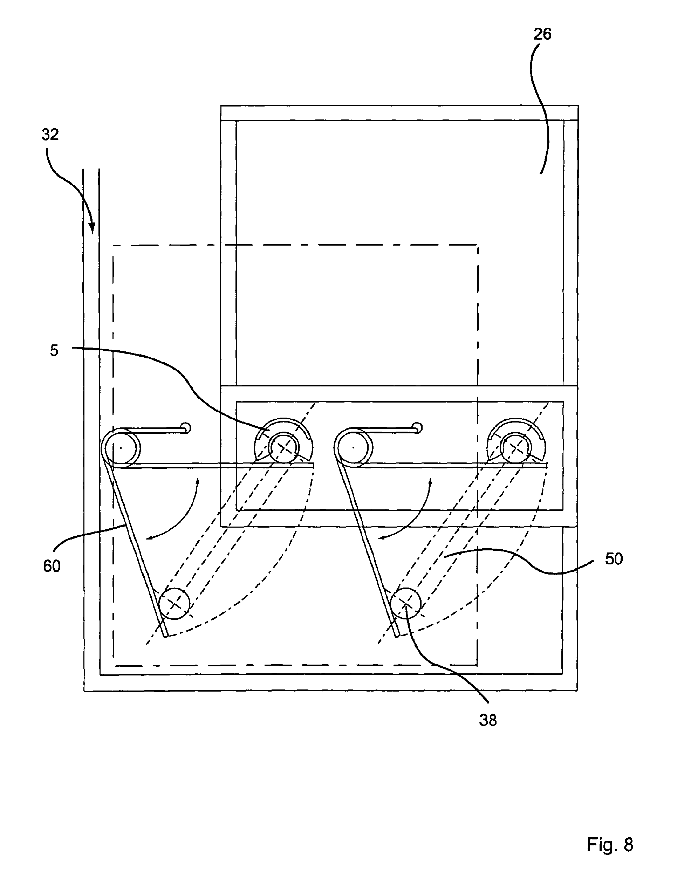

Wenn das Verdeck nach Öffnen der Verdeckklappe 24 geschlossen wird, gelangt das Gestängeteil 20, dessen Bewegungsbahn in den Figuren 6 und 7 dargestellt ist, in Anlage an den Hinterrand 62 des Abdeckteils 26, der etwa in Fahrzeugquerrichtung verläuft. Bei der weiteren Bewegung des Gestängeteils 20 wird das an Führungsgehäuse 32 geführte Abdeckteil 26 bezogen auf das Fahrzeug nach vorne und wegen der zur Fahrzeuglängsmittelebene geneigten Wand 48 zur Fahrzeugmitte hin abwärts geführt. Bei weiterer Bewegung des Gestängeteils 20 überfährt es wegen der Seitwärtsbewegung des Abdeckteils 26 dessen Hinterrand 62 und gelangt an dessen Seitenrand 64, längs dessen es sich vorwärts bewegt und dabei das Abdeckteil 26 weiter in seine in Figuren 6 bis 8 gestrichelt dargestellte Lage bewegt, die es bei voll geschlossenem Verdeck einnimmt. Wie ersichtlich, gibt das Abdeckteil 26 in seiner gestrichelten Stellung die Durchgangsöffnung 22 des Innenverkleidungsteils 23 für einen Durchtritt des Gestängeteils 20 frei.

Die gesamte Abdeckvorrichtung ist, wie aus dem Vorstellen hervorgeht, einfach als vormontierbare Baugruppe insgesamt im Fahrzeug platzsparend anbringbar.

Die beschriebene Vorrichtung kann in vielfältiger Weise abgeändert werden. Beispielsweise kann das Verkleidungsteil 30 einteilig mit dem Abdeckteil 26 ausgebildet sein, wobei die der Oberseite des Verkleidungsteils 30 entsprechende Oberseite des Abdeckteils dann vorteilhafterweise mit einem Material kaschiert wird, das der Oberfläche des Innenverkleidungsteils 23 entspricht. Desweiteren kann die Ausbildung derart sein, dass sich das Abdeckteil 26 beim Schließen des Verdecks nicht zur Fahrzeugmitte hin sondern zur Fahrzeugaußenseite hin bewegt. Desweiteren ist es nicht zwingend, dass das Abdeckteil in einem gesonderten, getrennt montierbaren Führungsteil montiert ist; im Fahrzeug kann ein Führungsblech vorgesehen sein, an dem das Abdeckteil geführt ist. Für die Führungen und die Gestaltung des Abdeckteils gibt es unterschiedlichste Möglichkeiten, solange nur gewährleistet ist, dass das Abdeckteil sich beim Schließen des Verdecks abwärts und in Vorwärtsrichtung des Fahrzeugs und zugleich mit einer seitlichen Komponente bewegt. Die dargestellte Ausführungsform des Abdeckteils 26 mit seinem quer zur Fahrzeuglängsrichtung verlaufenen hinterem und schräg zur Fahrzeuglängsrichtung verlaufenen Seitenrand ist nicht zwingend. Es kann auch einen insgesamt schräg verlaufenden Rand aufweisen, der mit dem Gestängeteil 20 zusammenwirkt.Abdeckteil und Führungsgehäuse sind beispielsweise Kunststoffformteile, ggf. mit Faserverstärkungen, oder einfache Blechformteile. Die Bewegung des Abdeckteils muss nicht unmittelbar mechanisch durch ein Gestängebauteil betätigt erfolgen; sie kann auch elektrisch angetrieben erfolgen.

### Bezugszeichen

10 Cabrioletfahrzeuge
12 Verdeckgestänge
14 Seitengestänge
16 Querspriegel
18 Verdeckkasten
20 Gestängeteil
22 Durchgangsöffnung
23 Innenverkleidungsteil
24 Verdeckklappe
26 Abdeckteil
28 Öffnung
30 Verkleidungsteil
32 Führungsgehäuse
34 Körper
36 Seitenfläche
38 Führungszapfen
40 Oberteil
42 Clipsarm
44 Unterteil
46 Randflansch
48 Wand
50 Führungsschlitz
51 Sicherungsclip
52 Schenkelfeder
54 Haltezapfen
56 Schenkel
58 Loch
60 Schenkel
62 Hinterrand
64 Seitenrand

## Patentansprüche

1. Abdeckvorrichtung für eine in einem oberen Seitenwandbereich eines Cabrioletfahrzeugs angeordnete Durchgangsöffnung (22), durch die sich beim Öffnen und Schließen des Verdecks wenigstens ein Gestängeteil (20) eines seitlichen Verdeckgestänges hindurchbewegt, welche Abdeckvorrichtung ein die Durchgangsöffnung bei geöffnetem Verdeck verschließendes Abdeckteil (26) enthält, welches in einer Führung (50) derart beweglich geführt ist, dass es bei Schließen des Verdecks unter Freigeben der Durchgangsöffnung in Vorwärtsrichtung des Fahrzeugs und nach unten bewegt wird, **dadurch gekennzeichnet, dass** die Führung (50) derart ausgebildet ist, dass das Abdeckteil (26) beim Schließen des Verdecks zusätzlich in Querrichtung des Fahrzeugs bewegt wird.

2. Abdeckvorrichtung nach Anspruch 1, **dadurch gekennzeichnet, dass** das Abdeckteil (26) elastisch in seine Schließstellung vorgespannt ist.

3. Abdeckvorrichtung nach Anspruch 1 oder 2, **dadurch gekennzeichnet, dass** die Führung (50) derart ausgebildet ist, dass das Abdeckteil (26) beim Schließen des Verdecks zur Fahrzeugmitte hin bewegt wird.

4. Abdeckvorrichtung nach einem der Ansprüche 1 bis 3,
**dadurch gekennzeichnet, dass** das Abdeckteil (26) den Rand der Durchgangsöffnung (22) überlappt und an seiner Oberseite mit einer Erhöhung (30) ausgebildet ist, die bei geöffnetem Verdeck bündig mit dem benachbarten Randbereich der Durchgangsöffnung (22) verläuft.

5. Abdeckvorrichtung nach einem der Ansprüche 1 bis 4,
**dadurch gekennzeichnet, dass** das Abdeckteil (26) einen etwa in Querrichtung des Fahrzeugs verlaufenden Hinterrand (62) und einen schräg zur Fahrzeuglängsrichtung verlaufenden Seitenrand (64) aufweist, wobei das wenigstens ein Gestängeteil (20) beim Schließen des Verdecks das Abdeckteil zunächst durch Anlage an dem Hinterrand und anschließend durch Anlage an dem Seitenrand bewegt.

6. Abdeckvorrichtung nach einem der Ansprüche 1 bis 5, **dadurch gekennzeichnet, dass** das Abdeckteil(26)an einer etwa parallel zur Fahrzeugslängsrichtung und schräg zur Fahrzeuglängsmittelebene verlaufenden Führungsfläche (36, 48) geführt ist.

7. Abdeckvorrichtung nach einem der Ansprüche 1 bis 6, **dadurch gekennzeichnet, dass** das Abdeckteil (26) mit wenigstens einem Führungszapfen (38) in einem bezogen auf das Fahrzeug schräg nach vorne, unten und seitlich gerichteten Führungsschlitz (50) geführt ist.

8. Abdeckvorrichtung nach einem der Ansprüche 1 bis 7,
**dadurch gekennzeichnet, dass** das Abdeckteil (26) in einem starr mit dem Fahrzeug verbundenen Führungsgehäuse (32) beweglich geführt ist.
